# EUROPEAN PATENT APPLICATION

(11) **EP 4 279 295 A1**
(43) Date of publication of application: **22.11.2023**
(21) Application number: 21919650.8
(22) Date of filing: 14.12.2021
(51) Int. Cl.: B60C 1/00, C08K 5/544, C08K 5/548, C08L 7/00, C08L 21/00, C08K 3/013, C08K 3/36

(54) **COMPOSITION INCLUDING ORGANOSILICON COMPOUND, RUBBER COMPOUNDING AGENT, AND RUBBER COMPOSITION**

(30) Priority: 14.01.2021 JP 2021004257
(71) Applicant: SHIN-ETSU CHEMICAL CO., LTD., Tokyo 1000005 (JP)
(72) Inventor: HIROKAMI Munenao, Annaka-shi, Gunma 379-0224 (JP); KIMURA Tsuneo, Annaka-shi, Gunma 379-0224 (JP); MINEMURA Masahiko, Annaka-shi, Gunma 379-0224 (JP); NAKAMURA Tsutomu, Annaka-shi, Gunma 379-0224 (JP); TONOMURA Yoichi, Joetsu-shi, Niigata 942-8601 (JP); ICHII Shun, Joetsu-shi, Niigata 942-8601 (JP); YANO Masashi, Sayama-shi, Saitama 350-1302 (JP)
(74) Representative: Mewburn Ellis LLP
(86) International application number: PCT/JP2021/046016
(87) International publication number: WO 2022/153762

(57) **Abstract**

When a composition including
(A) an organosilicon compound represented by formula 1 and
(B) when an organosilicon compound having at least one group selected from a polysulfide group, a thioester group, and a mercapto group and having an alkoxysilyl group is added to a rubber composition, a rubber composition is imparted that can achieve low fuel consumption and wear resistance while the workability of the composition and the hardness and tensile properties of cured products thereof are maintained. 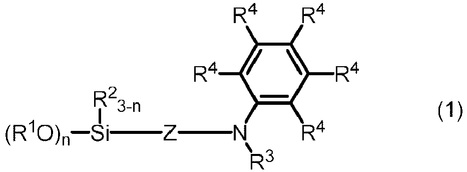 (R¹ and R² independently represent an alkyl group or an aryl group, R³ represents a hydrogen atom, an alkyl group, or an aryl group, R⁴ independently represents a hydrogen atom or a hydrocarbon group that may have a substituent other than a sulfur atom-containing group and may include a heteroatom other than a sulfur atom (adjacent R⁴ may crosslink with one another to form a ring), Z represents a divalent group not having a polysulfide group, a thioester group, or a mercapto group, and n represents an integer of 1-3.)

## Description

### TECHNICAL FIELD

This invention relates to a mix comprising organosilicon compounds, a rubber compounding agent comprising the mix, and a rubber composition comprising the mix.

### BACKGROUND ART

Silica-filled tires show excellent performance in the automotive application, especially excellent wear resistance, rolling resistance, and wet grip. Since these performance improvements are closely related to a saving of fuel consumption of tires, active efforts are currently devoted thereto, particularly in the field of passenger car tires using solution-polymerized styrene-butadiene rubber (S-SBR).

The silica-filled rubber compositions are effective for reducing rolling resistance and improving wet grip of tires, but suffer a problem of working because of a high unvulcanized viscosity and need for multi-stage milling.

Therefore, rubber compositions simply loaded with inorganic fillers like silica give rise to problems like poor dispersion of the filler and substantial drops of rupture strength and wear resistance. Sulfur-containing organosilicon compounds are thus essential for improving the dispersion of the inorganic filler in the rubber and for establishing chemical bonds between the filler and the rubber matrix.

Sulfur-containing organosilicon compounds known effective for use as rubber compounding agents include compounds containing alkoxysilyl and polysulfidesilyl groups in the molecule, for example, bis(triethoxysilylpropyl)tetrasulfide and bis(triethoxysilylpropyl)disulfide (see Patent Documents 1 to 4).

High load capacity tires mounted on tracks and buses are required to have high rupture resistance so as to withstand their use under severe conditions. The rubber used therein is natural rubber. For such tires, the demand for low fuel consumption and wear resistance improvement is increasing (see Patent Document 5).

### PRIOR ART DOCUMENTS

### PATENT DOCUMENTS

Patent Document 1: JP-A 2004-525230
Patent Document 2: JP-A 2004-018511
Patent Document 3: JP-A 2002-145890
Patent Document 4: JP-A 2000-103795
Patent Document 5: JP-A 2019-131649

### SUMMARY OF INVENTION

### TECHNICAL PROBLEM

An object of the invention, which has been made under the above-mentioned circumstances, is to provide a mix (or rubber compounding agent) comprising organosilicon compounds which when added to a rubber composition, imparts desired low fuel consumption and wear resistance properties to the rubber composition while maintaining the workability of the rubber composition and the hardness and tensile properties of the cured rubber composition, as well as a rubber composition having the rubber compounding agent formulated therein and a tire formed from the rubber composition.

### SOLUTION TO PROBLEM

Making extensive investigations to solve the outstanding problems, the inventors have found that a mix comprising a specific organosilicon compound having an aniline skeleton and a hydrolyzable silyl group and a specific organosilicon compound having sulfur atom and a hydrolyzable silyl group is useful as a rubber compounding agent, and that a tire obtained from a rubber composition comprising the rubber compounding agent exhibits desired low fuel consumption and wear resistance properties while maintaining the hardness and tensile properties. The invention is predicated on this finding.

Accordingly, the invention provides the following.
1. A mix comprising
   (A) an organosilicon compound having the formula (1): 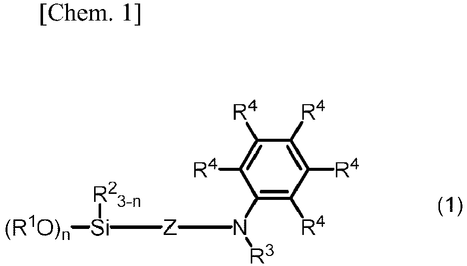 wherein R¹ is each independently a C₁-C₁₀ alkyl group or C₆-C₁₀ aryl group, R² is each independently a C₁-C₁₀ alkyl group or C₆-C₁₀ aryl group, R³ is hydrogen, a C₁-C₁₀ alkyl group or C₆-C₁₀ aryl group, R⁴ is each independently hydrogen or a C₁-C₂₀ hydrocarbon group which may have a substituent other than sulfur-containing group and may contain a heteroatom other than sulfur, with the proviso that adjacent R⁴ may crosslink to form a ring, Z is a divalent group which is free of a polysulfide, thio ester or mercapto group, and n is an integer of 1 to 3, and
   (B) an organosilicon compound having an alkoxysilyl group and at least one group selected from a polysulfide group, thio ester group and mercapto group.
2. The mix of 1 wherein component (A) is at least one compound selected from organosilicon compounds having the formulae (2) to (4): 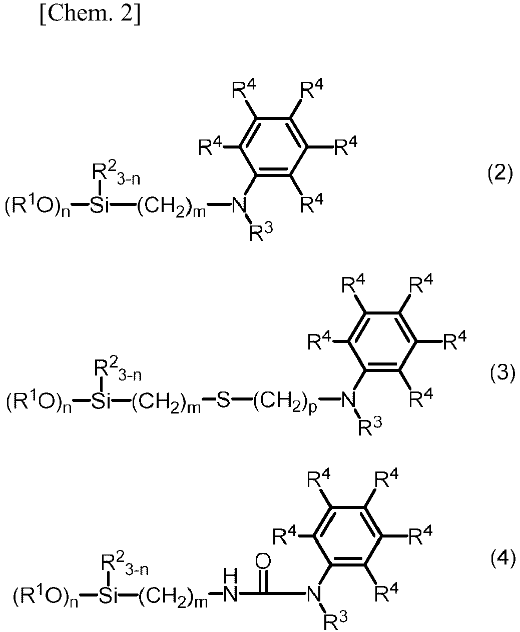 wherein R¹, R², R³, R⁴, and n are as defined above, m is an integer of 1 to 12, and p is an integer of 1 to 12.
3. A rubber compounding agent comprising the mix of 1 or 2.
4. A rubber composition comprising the rubber compounding agent of 3.
5. A rubber composition comprising
   (A) an organosilicon compound having the formula (1): 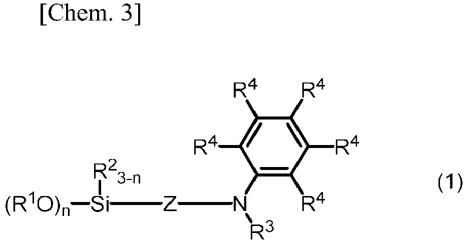 wherein R¹ is each independently a C₁-C₁₀ alkyl group or C₆-C₁₀ aryl group, R² is each independently a C₁-C₁₀ alkyl group or C₆-C₁₀ aryl group, R³ is hydrogen, a C₁-C₁₀ alkyl group or C₆-C₁₀ aryl group, R⁴ is each independently hydrogen or a C₁-C₂₀ hydrocarbon group which may have a substituent other than sulfur-containing group and may contain a heteroatom other than sulfur, with the proviso that adjacent R⁴ may crosslink to form a ring, Z is a divalent group which is free of a polysulfide, thio ester or mercapto group, and n is an integer of 1 to 3.
   (B) a compound having an alkoxysilyl group and at least one group selected from a polysulfide group, thio ester group and mercapto group,
   (C) a diene rubber, and
   (D) a filler.
6. The rubber composition of 5 wherein component (A) is at least one compound selected from organosilicon compounds having the formulae (2) to (4): 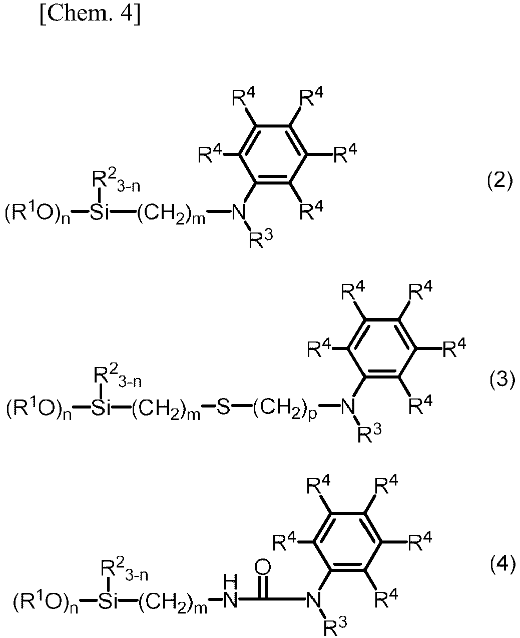 wherein R¹, R², R³, R⁴, and n are as defined above, m is an integer of 1 to 12, and p is an integer of 1 to 12.
7. The rubber composition of 5 or 6 wherein component (C) is natural rubber.
8. The rubber composition of any one of 5 to 7 wherein component (D) is silica.
9. A tire obtained by molding the rubber composition of any one of 4 to 8.

### ADVANTAGEOUS EFFECTS OF INVENTION

The rubber composition comprising the rubber compounding agent comprising the inventive mix is easy to work. Tires manufactured from the rubber composition satisfy desired low fuel consumption and wear resistance properties while maintaining the hardness and tensile properties.

### DESCRIPTION OF EMBODIMENTS

Now the invention is described in detail.

### [Mix containing organosilicon compounds]

The invention provides a mix comprising components (A) and (B):
(A) an organosilicon compound having the formula (1), shown below, and
(B) an organosilicon compound having an alkoxysilyl group and at least one group selected from a polysulfide group, thio ester group and mercapto group.

### [1] Component (A)

Component (A) is an organosilicon compound having the formula (1).

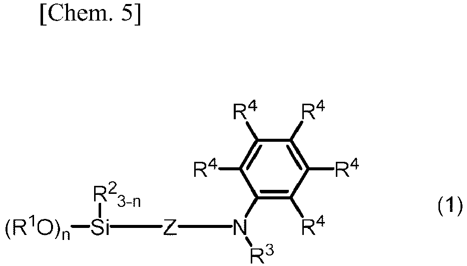

R¹ is each independently a C₁-C₁₀, preferably C₁-C₈, more preferably C₁-C₆ alkyl group or a C₆-C₁₀, preferably C₆-C₈ aryl group. R² is each independently a C₁-C₁₀, preferably C₁-C₈, more preferably C₁-C₆ alkyl group or a C₆-C₁₀ aryl group. R³ is hydrogen, a C₁-C₁₀ alkyl group or a C₆-C₁₀, preferably C₆-C₈ aryl group. R⁴ is each independently hydrogen or a C₁-C₂₀ hydrocarbon group which may have a substituent other than sulfur-containing group and may contain a heteroatom other than sulfur, with the proviso that adjacent R⁴ may crosslink to form a ring. Z is a divalent group which is free of a polysulfide, thio ester or mercapto group, and n is an integer of 1 to 3.

The C₁-C₁₀ alkyl group R¹ may be straight, branched or cyclic and examples thereof include methyl, ethyl, n-propyl, isopropyl, n-butyl, isobutyl, s-butyl, t-butyl, n-pentyl, n-hexyl, and cyclohexyl.

Examples of the C₆-C₁₀ aryl group include phenyl and tolyl.

Inter alia, R¹ is preferably a C₁-C₃ alkyl group, more preferably methyl or ethyl, most preferably ethyl.

Examples of the C₁-C₁₀ alkyl group and C₆-C₁₀ aryl group represented by R² are as mentioned for R¹. Inter alia, methyl is most preferred.

The C₁-C₁₀ alkyl group R³ may be straight, branched or cyclic and examples thereof include methyl, ethyl, n-propyl, isopropyl, n-butyl, isobutyl, s-butyl, t-butyl, n-pentyl, n-hexyl, and cyclohexyl. Examples of the C₆-C₁₀ aryl group include phenyl and tolyl. Inter alia, R³ is preferably hydrogen, methyl, ethyl, or phenyl.

Examples of the C₁-C₂₀ hydrocarbon group which may have a substituent other than sulfur-containing group and may contain a heteroatom other than sulfur, represented by R⁴, include straight, branched or cyclic alkyl groups, aryl groups and aralkyl groups.

Examples thereof include straight, branched or cyclic alkyl groups such as methyl, ethyl, n-propyl, isopropyl, n-butyl, isobutyl, s-butyl, t-butyl, n-pentyl, n-hexyl, cyclohexyl, 3-hexyl, isohexyl, tert-hexyl, heptyl, isoheptyl, octyl, isooctyl, 2-ethylhexyl, nonyl, decyl, undecyl, dodecyl, tridecyl, tetradecyl, pentadecyl, hexadecyl, heptadecyl, octadecyl, nonadecyl, eicosyl, cyclopentyl, cyclohexyl, cycloheptyl, methylcyclohexyl and tert-butylcyclohexyl; haloalkyl groups such as trifluoromethyl, trichloromethyl, tetrafluoroethyl and tetrachloroethyl; alkoxy groups such as methoxy, ethoxy, n-propyloxy, isopropyloxy, n-butyloxy, s-butyloxy, isobutyloxy, t-butyloxy, n-pentyloxy, n-hexyloxy, n-heptyloxy, n-octyloxy, n-nonyloxy and n-decyloxy; cycloalkoxy groups such as cyclopropyloxy, cyclobutyloxy, cyclopentyloxy and cyclohexyloxy; aryl groups such as phenyl, naphthyl and anthracenyl; aryloxy groups such as phenyloxy, 1-naphthyloxy and 2-naphthyloxy; arylalkyl groups such as phenyl-C₁-C₁₂ alkyl, naphthyl-C₁-C₁₀ alkyl, and anthracenyl-C₁-C₆ alkyl; arylalkoxy groups such as phenyl-C₁-C₁₂ alkoxy and naphthyl-C₁-C₁₀ alkoxy; heterocyclic groups such as pyrrolyl, furanyl, furyl, pyridyl, pyridazinyl, pyrimidyl, triazinyl, pyrrolidyl, piperidyl, quinolyl and isoquinolyl; aryl- or alkylamino groups such as phenylamino and methylamino; alkylsilyl groups such as trimethylsilyl; acyl groups such as acetyl, propionyl, butyryl, isobutyryl, pivaloyl and benzoyl; acyloxy groups such as acetoxy, propionyloxy, butyryloxy, isobutyryloxy, pivaloyloxy and benzoyloxy; carboxy groups; and cyano groups.

Of these, R⁴ is preferably hydrogen or an arylamino group. It is more preferred that R⁴ be all hydrogen or a combination of hydrogen and phenylamino and even more preferred that R⁴ be all hydrogen or a combination of four hydrogen atoms and one phenylamino group.

Z is not particularly limited as long as it is a divalent group which is free of a polysulfide, thio ester or mercapto group. Examples include C₁-C₂₀ alkylene groups which may contain an oxygen atom (-O) or sulfur atom (-S-), -NHCO-, -CONH-, -COO-, -OCO-, and combinations thereof.

Inter alia, Z is preferably -(CH₂)ₘ- wherein m is an integer of 1 to 12, -(CH₂)ₘ-S-(CH₂)ₚ-wherein m and p are each independently an integer of 1 to 12, and -(CH₂)ₘ-NHCO-wherein m is as defined above.

Accordingly, organosilicon compounds having the following formulae (2) to (4) are preferred as component (A). 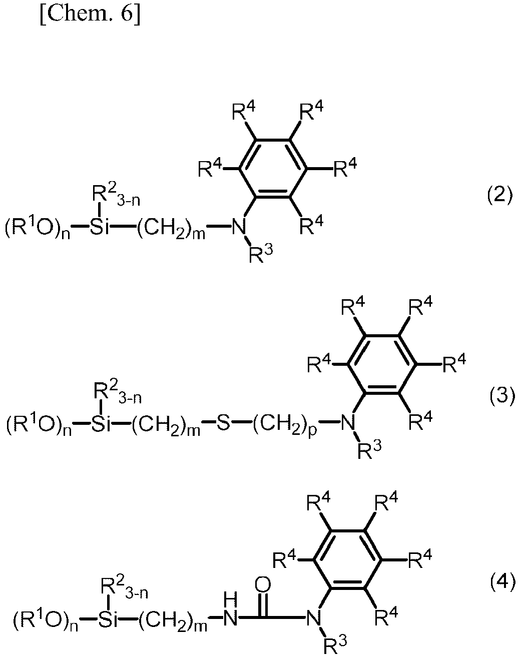 Herein R¹, R², R³, R⁴, and n are as defined above, m is an integer of 1 to 12, and p is an integer of 1 to 12.

Examples of the organosilicon compound having formula (2) include compounds of the formulae shown below. Herein Me stands for methyl, and Et for ethyl (the same holds true, hereinafter).

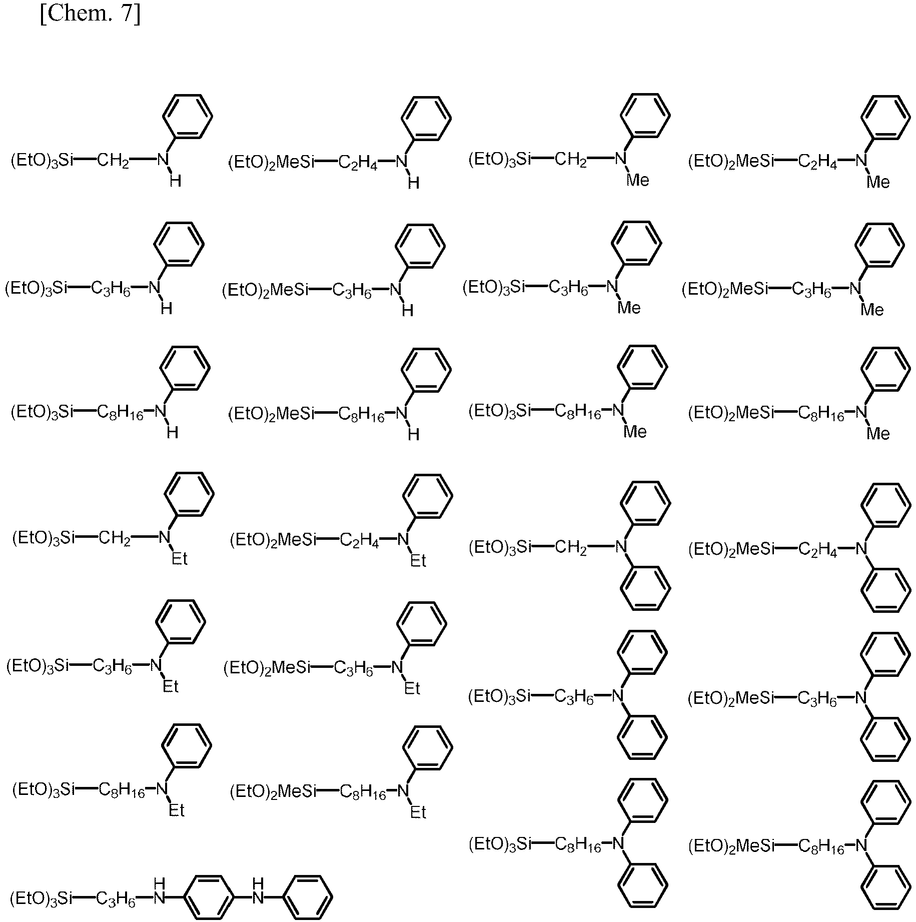

Examples of the organosilicon compound having formula (3) include compounds of the formulae shown below.

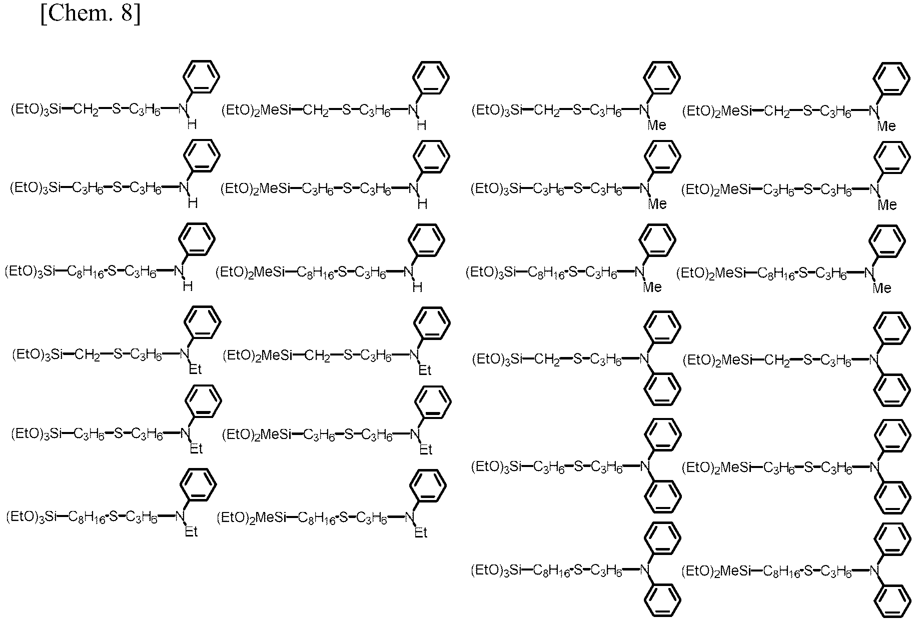

Examples of the organosilicon compound having formula (4) include compounds of the formulae shown below.

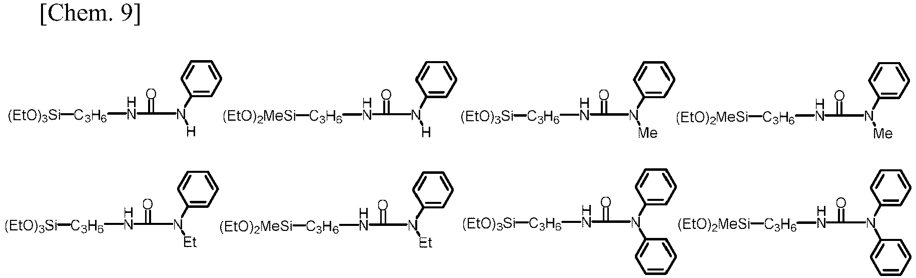

It is noted that component (A) may be used alone or in admixture of two or more.

### [2] Component (B)

Component (B) is an organosilicon compound having an alkoxysilyl group and at least one group selected from a polysulfide group, thio ester group and mercapto group.

Component (B) is not particularly limited as long as it is a compound having the functional groups described above. For example, any of prior art well-known silane coupling agents which are blended in rubber compositions for tire and other applications may be used.

Examples of such silane coupling agents include polysulfide organosilicon compounds such as bis(3-bistriethoxysilylpropyl)tetrasulfide and bis(3-bistriethoxysilylpropyl)disulfide; mercapto organosilicon compounds such as 3-mercaptopropyltrimethoxysilane and 3-mercaptopropyltriethoxysilane; and thioester organosilicon compounds such as 3-octanoylthiopropyltriethoxysilane and 3-propionylthiopropyltrimethoxysilane.

Also useful are the reaction products of the sulfur-containing organosilicon compounds with alcohols having polyether group, hydrolytic condensates of the organosilicon compounds, and co-hydrolytic condensates of the organosilicon compounds with other organosilicon compounds having alkoxysilyl group.

It is noted that component (B) may be used alone or in admixture of two or more.

In the inventive mix, the mixing ratio of component (B) to component (A) is preferably a weight ratio (B)/(A) of from 10/90 to 95/5, more preferably from 50/50 to 95/5, but not limited thereto.

### [Rubber compounding agent]

The mix comprising the aforementioned organosilicon compounds according to the invention may be used by itself as a rubber compounding agent while a blend of the mix with at least one powder may also be used as a rubber compounding agent.

Examples of the powder include carbon black, talc, calcium carbonate, stearic acid, silica, aluminum hydroxide, alumina, and magnesium hydroxide.

Of these, silica and aluminum hydroxide are preferred from the aspect of reinforcement, with silica being more preferred.

In view of ease of handling, transportation cost or other factors of the rubber compounding agent, the amount of the powder blended is preferably such that the weight ratio (X/Y) of the total (X) of components (A) and (B) to the total (Y) of the powder may range from 70/30 to 5/95, more preferably from 60/40 to 10/90.

The rubber compounding agent may have further mixed therein fatty acids, fatty acid salts, organic polymers or rubbers such as polyethylene, polypropylene, polyoxyalkylene, polyester, polyurethane, polystyrene, polybutadiene, polyisoprene, natural rubber, and styrene-butadiene copolymers as well as various additives commonly used in tire rubbers and general rubbers such as vulcanizers, crosslinkers, vulcanization accelerators, crosslinking accelerators, various oils, antioxidants, fillers, and plasticizers.

With respect to its form, the rubber compounding agent may be either liquid or solid, diluted with organic solvents, or emulsified.

### [Rubber composition]

The invention also provides a rubber composition comprising the above component (A), the above component (B), (C) a diene rubber, and (D) a filler.

In the rubber composition, the amounts of components (A) and (B) blended are preferably such that the total amount of components (A) and (B) may be 3 to 30 parts by weight, more preferably 5 to 20 parts by weight per 100 parts by weight of component (D) when the physical properties of the resulting rubber and a balance between the extent of the developed effect and economy are taken into account.

### [3] Component (C)

As component (C) or diene rubber, any of rubbers commonly used in conventional rubber compositions may be used. Examples include natural rubber, and diene rubbers such as various isoprene rubbers (IR), various styrene-butadiene copolymer rubbers (SBR), various polybutadiene rubbers (BR), and acrylonitrile-butadiene copolymer rubbers (NBR). These rubbers may be used alone or in admixture.

In particular, component (C) preferably contains natural rubber. The content of natural rubber in component (C) is preferably at least 50% by weight, more preferably 70 to 100% by weight, because sufficient breakage resistance is obtained even when the rubber composition is used as heavy load vehicle tires.

As the natural rubber, those commonly used in the tire industry such as RSS#3, SIR20 and TSR20 may be used. Also useful are modified natural rubbers such as epoxidized natural rubber, hydrogenated natural rubber, grafted natural rubber, and deproteinized natural rubber.

Besides the diene rubber, non-diene rubbers such as butyl rubber (IIR) and ethylene-propylene copolymer rubbers (EPR, EPDM) may be additionally used.

### [4] Component (D)

Examples of the filler as component (D) include those fillers commonly used in the tire industry such as silica, carbon black, aluminum hydroxide, alumina (aluminum oxide), calcium carbonate, talc, and clay. The filler may be used alone or in admixture.

Of these, a filler containing silica and carbon black is preferred, with a filler consisting of silica and carbon black being more preferred.

Examples of the carbon black include those commonly used in the tire industry such as GPF, FEF, HAF, ISAF, and SAF.

Examples of the silica include those commonly used in the tire industry such as silica prepared by the dry method (anhydrous silica) and silica prepared by the wet method (hydrous silica). Of these, the silica prepared by the wet method is preferred because of much silanol groups.

The silica preferably has a nitrogen adsorption specific surface area (N₂SA) of at least 70 m²/g, more preferably at least 100 m²/g. Although the upper limit of N₂SA is not critical, it is preferably up to 500 m²/g, more preferably up to 400 m²/g in view of ease of handling.

In the rubber composition, the amount of component (D) blended is preferably 5 to 150 parts by weight, more preferably 10 to 100 parts by weight, even more preferably 20 to 60 parts by weight per 100 parts by weight of component (C) in view of dispersibility, low fuel consumption, moldability, and workability.

In addition to the foregoing components (A) to (D), various additives commonly used in tire rubbers and general rubbers such as vulcanizers, crosslinkers, vulcanization accelerators, crosslinking accelerators, various oils, antioxidants, and plasticizers may be blended in the rubber composition. The amounts of these additives are as commonly blended in the prior art as long as the benefits of the invention are not impaired.

### [Rubber article or tire]

The rubber composition of the invention is prepared by combining components (A) to (C) and other components in a standard way. Through the subsequent vulcanization or crosslinking, the composition may be used in the manufacture of rubber articles such as tires. Especially in manufacturing tires, the rubber composition is preferably used as treads.

Since the tires obtained from the rubber composition are reduced in rolling resistance and improved in wear resistance, the desired saving of fuel consumption is achievable.

The tire may have any prior art well-known structures and be manufactured by any prior art well-known techniques. In the case of pneumatic tires, the gas introduced therein may be ordinary air, air having a controlled oxygen partial pressure, or an inert gas such as nitrogen, argon or helium.

### EXAMPLES

Examples and Comparative Examples are given below for further illustrating the invention although the invention is not limited thereto. Herein, the kinematic viscosity is measured at 25°C by a Cannon-Fenske viscometer. In the formulae shown below, Ph stands for phenyl.

### [1] Synthesis of organosilicon compounds

### [Synthesis Example 1-1]

A 1-L separable flask equipped with a stirrer, reflux condenser, dropping funnel and thermometer was charged with 372.4 g (4.0 mol) of aniline (Tokyo Chemical Industry Co., Ltd.). At 120°C, 240.8 g (1.0 mol) of chloropropyltriethoxysilane (KBE-703, Shin-Etsu Chemical Co., Ltd.) was added dropwise thereto, followed by aging at 120°C for 4 hours. Thereafter, filtration and distillation for purification were carried out, obtaining organosilicon compound (A-1) having the following formula.

(EtO)₃Si-C₃H₆-NHPh (A-1)

### [Synthesis Example 1-2]

A 1-L separable flask equipped with a stirrer, reflux condenser, dropping funnel and thermometer was charged with 428.8 g (4.0 mol) of N-methylaniline (Tokyo Chemical Industry Co., Ltd.). At 120°C, 240.8 g (1.0 mol) of chloropropyltriethoxysilane (KBE-703, Shin-Etsu Chemical Co., Ltd.) was added dropwise thereto, followed by aging at 120°C for 4 hours. Thereafter, filtration and distillation for purification were carried out, obtaining organosilicon compound (A-2) having the following formula.

(EtO)₃Si-C₃H₆-NMePh (A-2)

### [Synthesis Example 1-3]

A 1-L separable flask equipped with a stirrer, reflux condenser, dropping funnel and thermometer was charged with 484.8 g (4.0 mol) of N-ethylaniline (Tokyo Chemical Industry Co., Ltd.). At 120°C, 240.8 g (1.0 mol) of chloropropyltriethoxysilane (KBE-703, Shin-Etsu Chemical Co., Ltd.) was added dropwise thereto, followed by aging at 120°C for 4 hours. Thereafter, filtration and distillation for purification were carried out, obtaining organosilicon compound (A-3) having the following formula.

(EtO)₃Si-C₃H₆-NEtPh (A-3)

### [Synthesis Example 1-4]

A 1-L separable flask equipped with a stirrer, reflux condenser, dropping funnel and thermometer was charged with 133.2 g (1.0 mol) of N-allylaniline (Tokyo Chemical Industry Co., Ltd.), 238.4 g (1.0 mol) of 3-mercaptopropyltriethoxysilane (KBE-803, Shin-Etsu Chemical Co., Ltd.), and 300 g of toluene. At 100°C, 5.0 g of Perbutyl O (NOF Corp.) was added dropwise thereto, followed by aging at 100°C for 4 hours. The solvent was then distilled off, obtaining organosilicon compound (A-4) having the following formula.

(EtO)₃Si-C₃H₆-S-C₃H₆-NHPh (A-4)

### [Synthesis Example 1-5]

A 1-L separable flask equipped with a stirrer, reflux condenser, dropping funnel and thermometer was charged with 93.2 g (1.0 mol) of aniline (Tokyo Chemical Industry Co., Ltd.). At 80°C, 247.4 g (1.0 mol) of 3-isocyanatopropyltriethoxysilane (KBE-9007N, Shin-Etsu Chemical Co., Ltd.) was added dropwise thereto, followed by aging at 80°C for 4 hours. There was obtained organosilicon compound (A-5) having the following formula.

(EtO)₃Si-C₃H₆-NHCONHPh (A-5)

### [Comparative Synthesis Example 1-1]

A 1-L separable flask equipped with a stirrer, reflux condenser, dropping funnel and thermometer was charged with 404.8 g (4.0 mol) of hexylamine (Tokyo Chemical Industry Co., Ltd.). At 120°C, 240.8 g (1.0 mol) of chloropropyltriethoxysilane (KBE-703, Shin-Etsu Chemical Co., Ltd.) was added dropwise thereto, followed by aging at 120°C for 4 hours. Thereafter, filtration and distillation for purification were carried out, obtaining organosilicon compound (A-6) having the following formula.

(EtO)₃Si-C₃H₆-NH(C₆H₁₃)₂ (A-6)

### [Synthesis Example 1-7]

A 1-L separable flask equipped with a stirrer, reflux condenser, dropping funnel and thermometer was charged with 539 g (1.0 mol) of bis(triethoxysilylpropyl)tetrasulfide (KBE-846, Shin-Etsu Chemical Co., Ltd.), 222 g (0.8 mol) of octyltriethoxysilane (KBE-3083, Shin-Etsu Chemical Co., Ltd.), and 200 g of ethanol. At room temperature, 25.2 g of 0.5N hydrochloric acid (1.4 mol of water) was added dropwise thereto. The solution was stirred at 80°C for 10 hours. Then 3.0 g of propylene oxide was added dropwise, followed by stirring at 80°C for 2 hours. The subsequent concentration under reduced pressure and filtration gave organosilicon compound (B-2) having the following compositional formula as a brown transparent liquid having a kinematic viscosity of 80 mm²/s.

(-C₃H₆-S₄-C₃H₆-)_{0.36}(-C₈H₁₇)_{0.28}(-OC₂H₅)_{2.00}SiO_{0.50} (B-2)

### [2] Preparation of rubber compounding agents

### [Examples 1-1 to 1-8, Comparative Examples 1-1 to 1-3]

Using a 200-mL separable flask equipped with an agitator, the amounts (parts by weight) shown in Table 1 of components were mixed to form a rubber compounding agent.

**[Table 1]**

| Blending amount (pbw) | Example | | | | | | | | Comparative Example | | |
|---|---|---|---|---|---|---|---|---|---|---|---|
| | 1-1 | 1-2 | 1-3 | 1-4 | 1-5 | 1-6 | 1-7 | 1-8 | 1-1 | 1-2 | 1-3 |
| (A-1) | 10 | 25 | 50 | | | | | 25 | | | |
| (A-2) | | | | 25 | | | | | | | |
| (A-3) | | | | | 25 | | | | | | |
| (A-4) | | | | | | 25 | | | | | |
| (A-5) | | | | | | | 25 | | | | |
| (A-6) | | | | | | | | | | | 25 |
| (B-1) | 100 | 100 | 100 | 100 | 100 | 100 | 100 | | 100 | | 100 |
| (B-2) | | | | | | | | 100 | | 100 | |

| | | | | | | | | | | | |
|---|---|---|---|---|---|---|---|---|---|---|---|
| (B-1): bis(triethoxysilylpropyl)tetrasulfide (KBE-846, Shin-Etsu Chemical Co., Ltd.) | | | | | | | | | | | |

### [3] Preparation of rubber compositions

### [Examples 2-1 to 2-8, Comparative Examples 2-1 to 2-3]

On a 4-L internal mixer (MIXTRON by Kobelco), natural rubber shown in Tables 2 and 3 was kneaded for 60 seconds.

Next, oil, carbon black, silica, sulfide silane, the organopolysiloxanes obtained in Synthesis Examples, stearic acid, antioxidant, resin, and wax were added to the rubber as shown in Tables 2 and 3. The internal temperature was raised at 150°C, after which the mixture was discharged and stretched on a roll mill. The resulting rubber was kneaded again on an internal mixer (MIXTRON by Kobelco) until the internal temperature reached 145°C, discharged and stretched on a roll mill. Then zinc oxide, vulcanization accelerator and sulfur shown in Table 1 were added to the rubber and kneaded, obtaining a rubber composition.

Natural rubber: RSS#3
Silica: Nipsil AQ (Tosoh Silica Co., Ltd.)
Carbon black: Seast 9H (Tokai Carbon Co., Ltd.)
Stearic acid: industrial stearic acid (Kao Corp.)
Antioxidant: Nocrac 6C (Ouchi Shinko Chemical Industry Co., Ltd.)
Resin: T-REZ RA-100 (ENEOS Corp.)
Wax: Ozoace 0355 (Nippon Seiro Co., Ltd.)
Zinc oxide: Zinc white #3 (Mitsui Mining & Smelting Co., Ltd.)
Vulcanization accelerator (a): Nocceler DM-P (Ouchi Shinko Chemical Industry Co., Ltd.)
Vulcanization accelerator (b): Nocceler CZ-G (Ouchi Shinko Chemical Industry Co., Ltd.)
Sulfur: 5% oil-treated sulfur (Hosoi Chemical Industry Co., Ltd.)

The rubber compositions of Examples 2-1 to 2-8 and Comparative Examples 2-1 to 2-3 were measured for unvulcanized and vulcanized physical properties by the following methods. The results are also shown in Tables 2 and 3. For the measurement of vulcanized physical properties, the rubber composition was press molded at 145°C for 30 minutes into a vulcanized rubber sheet (2 mm thick).

### [Unvulcanized physical properties]

### (1) Mooney viscosity

According to JIS K 6300-1:2013, measurement was made under conditions: temperature 130°C, preheating 1 minute, and measurement 4 minutes. The measurement result was expressed as an index based on 100 for Comparative Example 2-1. A lower index corresponds to a lower Mooney viscosity and indicates better workability.

### [Vulcanized physical properties]

### (2) Hardness

According to JIS K 6253-3:2012, Durometer Type A hardness was measured. The measurement result was expressed as an index based on 100 for Comparative Example 2-1.

### (3) Tensile property

The rubber sheet was punched into a JIS #3 dumbbell specimen, which was subjected to a tensile test at a pulling speed of 500 mm/min according to JIS K 6251. A 300% modulus (M300 in MPa) was measured at room temperature. The result was expressed as an index based on 100 for Comparative Example 2-1. A higher index indicates a higher modulus and better tensile property.

### (4) Dynamic viscoelasticity (strain dispersion)

Using a viscoelasticity meter (Metravib), a storage elasticity at strain 0.5%, E' (0.5%) and a storage elasticity at strain 3.0%, E' (3.0%) were measured under conditions: temperature 25°C and frequency 55 Hz. A value of [E' (0.5%) - E' (3.0%)] was computed. The test specimen was a sheet of 0.2 cm thick and 0.5 cm wide, the clamp span was 2 cm, and the initial load was 1 N. The value of [E' (0.5%) - E' (3.0%)] was expressed as an index based on 100 for Comparative Example 2-1. A lower index indicates better dispersion of silica.

### (5) Dynamic viscoelasticity (temperature dispersion)

Using a viscoelasticity meter (Metravib), measurement was made under conditions: tensile dynamic strain 1% and frequency 55 Hz. The test specimen was a sheet of 0.2 cm thick and 0.5 cm wide, the clamp span was 2 cm, and the initial load was 1 N. The value of tanδ (60°C) was expressed as an index based on 100 for Comparative Example 2-1. A lower index for tan6 (60°C) indicates better rolling resistance.

### (6) Wear resistance

Using a FPS tester (Ueshima Seisakusho Co., Ltd.), the test was carried out under conditions: sample speed 200 m/min, load 20 N, road temperature 30°C, and slip rate 5% or 20%. The measurement result was expressed as an index based on 100 for Comparative Example 2-1. A greater index indicates a smaller abrasion and hence, better wear resistance.

**[Table 2]**

| Formulation (pbw) | | | Example | | | | | | | |
|---|---|---|---|---|---|---|---|---|---|---|
| | | | 2-1 | 2-2 | 2-3 | 2-4 | 2-5 | 2-6 | 2-7 | 2-8 |
| Natural rubber | | | 100 | 100 | 100 | 100 | 100 | 100 | 100 | 100 |
| Carbon black | | | 20 | 20 | 20 | 20 | 20 | 20 | 20 | 20 |
| Silica | | | 30 | 30 | 30 | 30 | 30 | 30 | 30 | 30 |
| Rubber compounding agent | | Example 1-1 | 4 | - | - | - | - | - | - | - |
| | | Example 1-2 | - | 4 | - | - | - | - | - | - |
| | | Example 1-3 | - | - | 4 | - | - | - | - | - |
| | | Example 1-4 | - | - | - | 4 | - | - | - | - |
| | | Example 1-5 | - | - | - | - | 4 | - | - | - |
| | | Example 1-6 | - | - | - | - | - | 4 | - | - |
| | | Example 1-7 | - | - | - | - | - | - | 4 | - |
| | | Example 1-8 | - | - | - | - | - | - | - | 4 |
| Stearic acid | | | 2 | 2 | 2 | 2 | 2 | 2 | 2 | 2 |
| Antioxidant | | | 2 | 2 | 2 | 2 | 2 | 2 | 2 | 2 |
| Resin | | | 1 | 1 | 1 | 1 | 1 | 1 | 1 | 1 |
| Wax | | | 1 | 1 | 1 | 1 | 1 | 1 | 1 | 1 |
| Zinc oxide | | | 2.5 | 2.5 | 2.5 | 2.5 | 2.5 | 2.5 | 2.5 | 2.5 |
| Vulcanization accelerator (a) | | | 0.3 | 0.3 | 0.3 | 0.3 | 0.3 | 0.3 | 0.3 | 0.3 |
| Vulcanization accelerator (b) | | | 1.0 | 1.0 | 1.0 | 1.0 | 1.0 | 1.0 | 1.0 | 1.0 |
| Sulfur | | | 1.8 | 1.8 | 1.8 | 1.8 | 1.8 | 1.8 | 1.8 | 1.8 |

| [Unvulcanized physical properties] | | | | | | | | | | |
|---|---|---|---|---|---|---|---|---|---|---|
| | Mooney viscosity | | 100 | 100 | 100 | 100 | 100 | 100 | 100 | 100 |

| [Vulcanized physical properties] | | | | | | | | | | |
|---|---|---|---|---|---|---|---|---|---|---|
| | Hardness | | 100 | 100 | 100 | 100 | 100 | 100 | 100 | 100 |
| | Tensile property M300 | | 100 | 100 | 100 | 100 | 100 | 100 | 100 | 100 |
| | Strain dispersion [E' (0.5%) - E' (3.0%)] | | 95 | 94 | 95 | 95 | 96 | 95 | 95 | 85 |
| | Dynamic viscoelasticity tanδ (60°C) | | 96 | 96 | 97 | 96 | 97 | 96 | 97 | 85 |
| | Wear resistance (slip rate 5%) | | 110 | 115 | 115 | 115 | 113 | 115 | 107 | 113 |
| | Wear resistance (slip rate 20%) | | 110 | 115 | 115 | 115 | 113 | 115 | 107 | 113 |

**[Table 3]**

| Formulation (pbw) | | | Comparative Example | | |
|---|---|---|---|---|---|
| | | | 2-1 | 2-2 | 2-3 |
| Natural rubber | | | 100 | 100 | 100 |
| Carbon black | | | 20 | 20 | 20 |
| Silica | | | 30 | 30 | 30 |
| Rubber compounding agent | | Comparative Example 1-1 | 3 | - | - |
| | | Comparative Example 1-2 | - | 3 | - |
| | | Comparative Example 1-3 | - | - | 4 |
| Stearic acid | | | 2 | 2 | 2 |
| Antioxidant | | | 2 | 2 | 2 |
| Resin | | | 1 | 1 | 1 |
| Wax | | | 1 | 1 | 1 |
| Zinc oxide | | | 2.5 | 2.5 | 2.5 |
| Vulcanization accelerator (a) | | | 0.3 | 0.3 | 0.3 |
| Vulcanization accelerator (b) | | | 1.0 | 1.0 | 1.0 |
| Sulfur | | | 1.8 | 1.8 | 1.8 |

| [Unvulcanized physical properties] | | | | | |
|---|---|---|---|---|---|
| | Mooney viscosity | | 100 | 100 | 103 |

| [Vulcanized physical properties] | | | | | |
|---|---|---|---|---|---|
| | Hardness | | 100 | 100 | 100 |
| | Tensile property M300 | | 100 | 100 | 100 |
| | Strain dispersion [E' (0.5%) - E' (3.0%)] | | 100 | 85 | 98 |
| | Dynamic viscoelasticity tanδ (60°C) | | 100 | 85 | 99 |
| | Wear resistance (slip rate 5%) | | 100 | 100 | 100 |
| | Wear resistance (slip rate 20%) | | 100 | 100 | 100 |

As shown in Tables 2 and 3, the vulcanized products of the rubber compositions of Examples 2-1 to 2-8 have a lower dynamic viscoelasticity than those of Comparative Examples 2-1 to 2-3 while maintaining hardness and tensile properties, that is, show a small hysteresis loss, low heat generation, and improved wear resistance.

## Claims

1. A mix comprising
(A) an organosilicon compound having the formula (1): 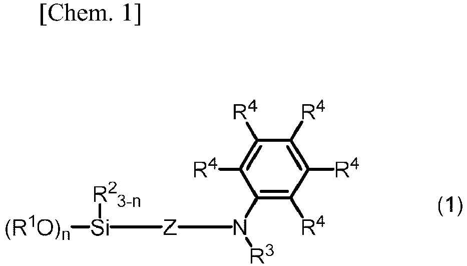 wherein R¹ is each independently a C₁-C₁₀ alkyl group or C₆-C₁₀ aryl group, R² is each independently a C₁-C₁₀ alkyl group or C₆-C₁₀ aryl group, R³ is hydrogen, a C₁-C₁₀ alkyl group or C₆-C₁₀ aryl group, R⁴ is each independently hydrogen or a C₁-C₂₀ hydrocarbon group which may have a substituent other than sulfur-containing group and may contain a heteroatom other than sulfur, with the proviso that adjacent R⁴ may crosslink to form a ring, Z is a divalent group which is free of a polysulfide, thio ester or mercapto group, and n is an integer of 1 to 3, and
(B) an organosilicon compound having an alkoxysilyl group and at least one group selected from a polysulfide group, thio ester group and mercapto group.

2. The mix of claim 1 wherein component (A) is at least one compound selected from organosilicon compounds having the formulae (2) to (4): 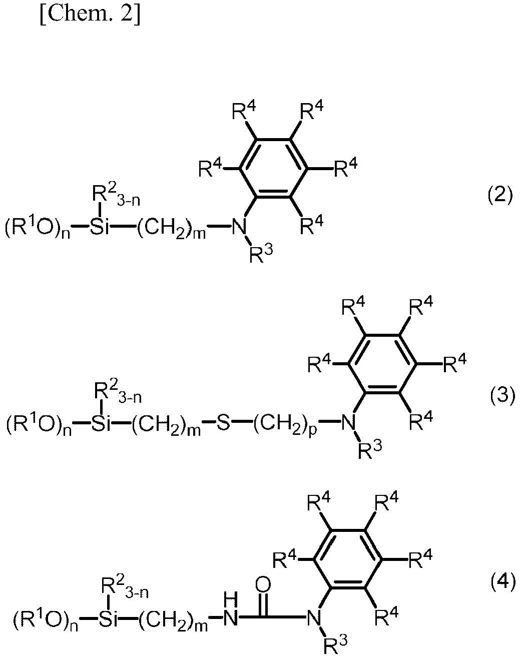 wherein R¹, R², R³, R⁴, and n are as defined above, m is an integer of 1 to 12, and p is an integer of 1 to 12.

3. A rubber compounding agent comprising the mix of claim 1 or 2.

4. A rubber composition comprising the rubber compounding agent of claim 3.

5. A rubber composition comprising
(A) an organosilicon compound having the formula (1): 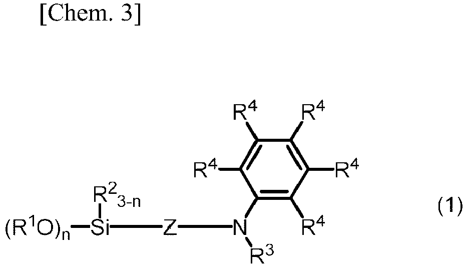 wherein R¹ is each independently a C₁-C₁₀ alkyl group or C₆-C₁₀ aryl group, R² is each independently a C₁-C₁₀ alkyl group or C₆-C₁₀ aryl group, R³ is hydrogen, a C₁-C₁₀ alkyl group or C₆-C₁₀ aryl group, R⁴ is each independently hydrogen or a C₁-C₂₀ hydrocarbon group which may have a substituent other than sulfur-containing group and may contain a heteroatom other than sulfur, with the proviso that adjacent R⁴ may crosslink to form a ring, Z is a divalent group which is free of a polysulfide, thio ester or mercapto group, and n is an integer of 1 to 3.
(B) a compound having an alkoxysilyl group and at least one group selected from a polysulfide group, thio ester group and mercapto group,
(C) a diene rubber, and
(D) a filler.

6. The rubber composition of claim 5 wherein component (A) is at least one compound selected from organosilicon compounds having the formulae (2) to (4): 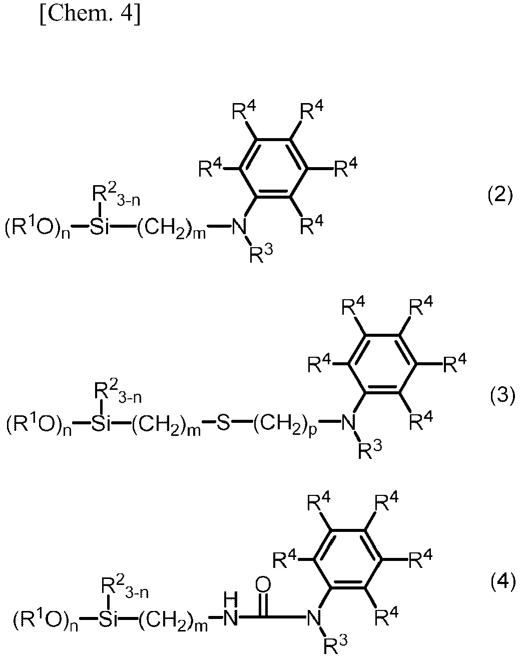 wherein R¹, R², R³, R⁴, and n are as defined above, m is an integer of 1 to 12, and p is an integer of 1 to 12.

7. The rubber composition of claim 5 or 6 wherein component (C) is natural rubber.

8. The rubber composition of any one of claims 5 to 7 wherein component (D) is silica.

9. A tire obtained by molding the rubber composition of any one of claims 4 to 8.
